(19) Europäisches Patentamt
European Patent Office
Office européen des brevets

(11) **EP 2 721 810 B1**

(12) **EUROPEAN PATENT SPECIFICATION**

(45) Date of publication and mention
of the grant of the patent:
**26.08.2015 Bulletin 2015/35**

(51) Int Cl.:
*H04N 5/217* (2011.01)     *H04N 5/367* (2011.01)

(21) Application number: **11730331.3**

(22) Date of filing: **11.07.2011**

(86) International application number:
**PCT/EP2011/061756**

(87) International publication number:
**WO 2013/007295 (17.01.2013 Gazette 2013/03)**

(54) **CAMERA APPARATUS AND CAMERA**

**KAMERAVORRICHTUNG UND KAMERA**

**APPAREIL DE CAMÉRA ET CAMÉRA**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.04.2014 Bulletin 2014/17**

(73) Proprietor: **Fraunhofer Gesellschaft zur Förderung der angewandten Forschung E.V.
80686 München (DE)**

(72) Inventors:
• **SCHÖBERL, Michael
91058 Erlangen (DE)**
• **KEINERT, Joachim
90425 Nürnberg (DE)**
• **KAUP, André
91090 Effeltrich (DE)**
• **FÖSSEL, Siegfried
91054 Erlangen (DE)**

(74) Representative: **Schenk, Markus
Schoppe, Zimmermann, Stöckeler
Zinkler, Schenk & Partner mbB
Patentanwälte
Radlkoferstrasse 2
81373 München (DE)**

(56) References cited:
**EP-A2- 1 601 185          EP-A2- 2 076 021
WO-A1-2009/058616     US-A1- 2004 252 201
US-A1- 2008 231 734**

• **MICHAEL SCHOBERL ET AL: "Sparsity-based defect pixel compensation for arbitrary camera raw images", ACOUSTICS, SPEECH AND SIGNAL PROCESSING (ICASSP), 2011 IEEE INTERNATIONAL CONFERENCE ON, IEEE, 22 May 2011 (2011-05-22), pages 1257-1260, XP032000973, DOI: 10.1109/ICASSP. 2011.5946639 ISBN: 978-1-4577-0538-0 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is concerned with a camera apparatus and a camera.

In many applications, color images of high quality are wanted. Examples for such applications are, for example, the media production market that includes high- and digital cinema applications as well as broadcast scenarios. Here, it would be favorable to be able to create images of highest image quality at a low camera complexity and finally, low cost.

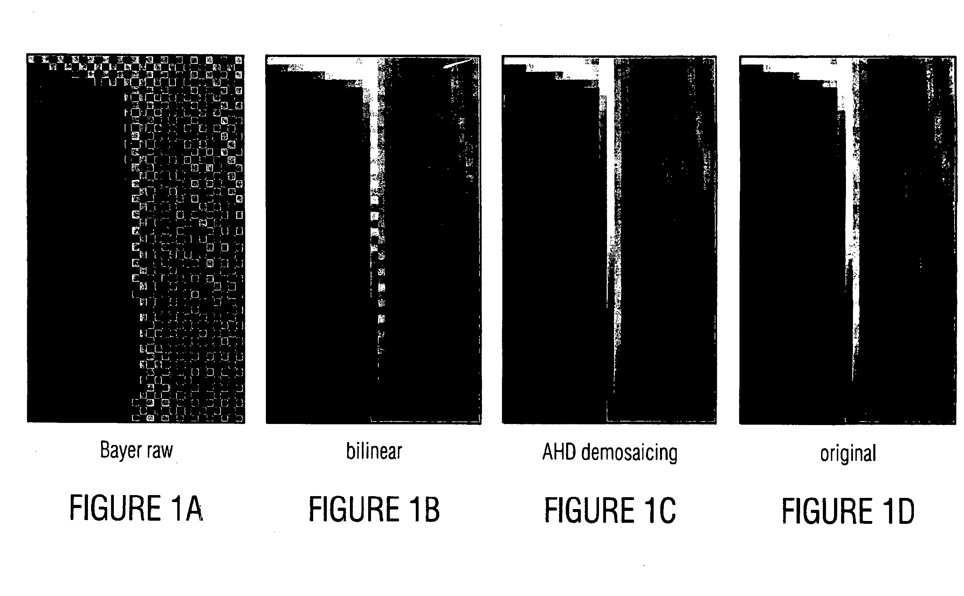

Today, the majority of color camera systems utilizes just a single image sensor. For the acquisition of color information, a *Color Filter Array* (CFA) is placed on top of the pixels. An example of such a raw data image is shown in Fig. 1: In a) we can see the color coded raw data of a Bayer pattern [2] color filter array. For each pixel we capture just a single intensity value. Images with this Bayer pattern sampling are not directly useful. They need additional processing and interpolation of color values. For a single measured value (e.g. a pixel sensitive to green light) we need, for example, to calculate intensity values for the missing color components (red and blue). There is a wide selection of algorithms available. Fig. 1b and c show the image after color reconstruction with a bilinear and the *Adaptive Homogeneity-Directed* (AHD) demosaicing algorithm [8]. Along the processing pipeline we further encounter algorithms for compensation of *Fixed Pattern Noise* (FPN) and interpolation of defect pixels. Traditionally, these algorithms are executed inside the camera which finally outputs a fully reconstructed color image, for example in RGB color space.

This, however, involves high camera complexity. Weighing up between camera costs on the one hand and image quality on the other hand, neither the camera costs nor the image quality would be optimum.

Document D1 (US 2004/0252201 A1) describes a handheld camera where a simple defective pixel correction pre-processing takes place inside the camera so as to avoid that the uncorrected pixel could cause some compression techniques to introduce compression artifacts in forwarding the image data on to a work station. Further pre-processings such as demosaicing or black level compensation can be performed at the work station.

Document D2 (US 2008/0231734 A1) describes a method of processing images from an image device and distinguishes between continuous defective pixels on the one hand and lone defective pixels on the other hand.

It is the object of the present invention to provide a camera apparatus and camera which address the above needs for achieving high image quality at reasonable costs such as, for example, applications which impose special demands on the image quality.

This object is achieved by the subject matter of the independent claims.

It is a basic idea underlying the present invention that high image quality at reasonable costs may be achieved if an image having a defect pixel position as captured by an image sensor is subject to a first defect compensation to obtain a preliminary compensated image having the defect pixel position interpolated, with then transmitting the preliminary compensated image by a lossy or loss-less compression to a data processor which, in turn, then performs a second defect compensation onto the transmitted image. The performance of the first defect compensation avoids negative effects of the defect pixel position of the camera image onto the compression ratio of the compression so that higher data transmission rates may be achieved with less expensive effort. If the compression is lossy, the performance of the first defect compensation also avoids negative effects of the defect pixel position of the camera image onto neighboring pixel positions due to the lossy compression. Favorably, the second defect compression may easily be implemented outside a camera housing such as to be performed, for example, off-line so that the complexity of the second defect compensation may be chosen to be greater than the complexity of the first defect compensation while concurrently achieving a higher image quality with keeping, however, the costs for the actual camera low. The second defect compensation may simply take place outside the camera (off-camera) in a standard PC, a broadcast van or a stationary processing box. In this case, the off-camera defect processing can also be chosen to have a high complexity.-This still keeps the overall cost for the system low. In general, the processing inside a camera is much more expensive as one needs to carry, for example, batteries and the required cooling, as to an offline computer system can be powered from a power outlet.

Accordingly, the present invention provides a camera apparatus according to claim 1.

Preferred aspects of the present invention are the subject of the dependent claims. Preferred aspects of the present invention are described in more detail below with respect to the figures, among which

Fig. 1 shows an example of a simulated camera raw image: a) raw image in Bayer format, each pixel is sensitive to only one color, b) after color reconstruction with simple bilinear demosaicing, c) AHD demosaicing and d) original image;

Fig. 2 shows a comparison of workflow strategies: a) traditional RGB workflow where all decisions directly influence the algorithms within the camera and b) raw workflow where the camera delivers raw data and the decisions then influence the algorithms in offline processing only;

Fig. 3 shows an image processing pipeline of a) a traditional RGB based camera and b) a raw camera system. The building blocks are mostly the same but are arranged in a different order. This shifts complexity from the camera to an off-camera processing stage;

Fig. 4 shows examples of typical FPN from a CMOS camera for a) offset FPN (gain x8) and b) dark current FPN (gain x16);

Fig. 5 shows an example of defect interpolation with cFSE algorithm: a) known image data, b) defect locations, c) to k) model g[m, n] after iteration v and 1) original image block;

Fig. 6 shows a comparison of defect interpolation algorithms for a variable number of defects $K_{3x3}$ in a region of $\mathscr{D}$ = 3 × 3 pixels, PSNR evaluated in Bayer image for defects only, average for all 24 Kodak images;

Fig. 7 shows examples from Kodak images sail (top row) and lighthouse (bottom row). a) Bayer raw image with defect pixels (shown in white), b) - g) demosaicing with AHD and defect interpolation processing: b) nearest neighbor, c) linear, d) median, e) adaptive defect correction, f) universal defect FSE based interpolation and g) original;

Fig. 8 shows processing elements within the basic workflow strategies shown in Fig. 2 with paying increased attention to the relation between the arrangement of defect pixel compensation and compression;

Fig. 9 shows several options for the relation between the arrangement of defect pixel correction and compression: a) within camera, b) outside the camera with loss-less or no compression, c) two-stage compensation method according to the preferred embodiment of the present invention;

Fig. 10 a block diagram showing a camera and a camera apparatus according to an embodiment of the present invention;

Fig. 11 shows simulation results for the compression of defect pixels in connection with lossy compression; and

Fig. 12 shows examples for the lossy compression of defect pixels according to Fig. 11.

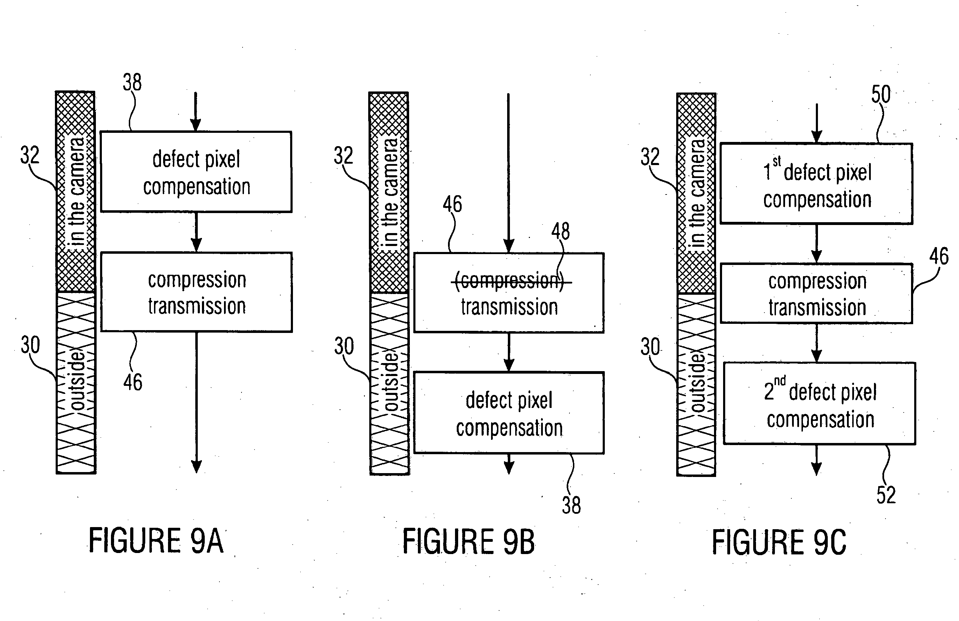

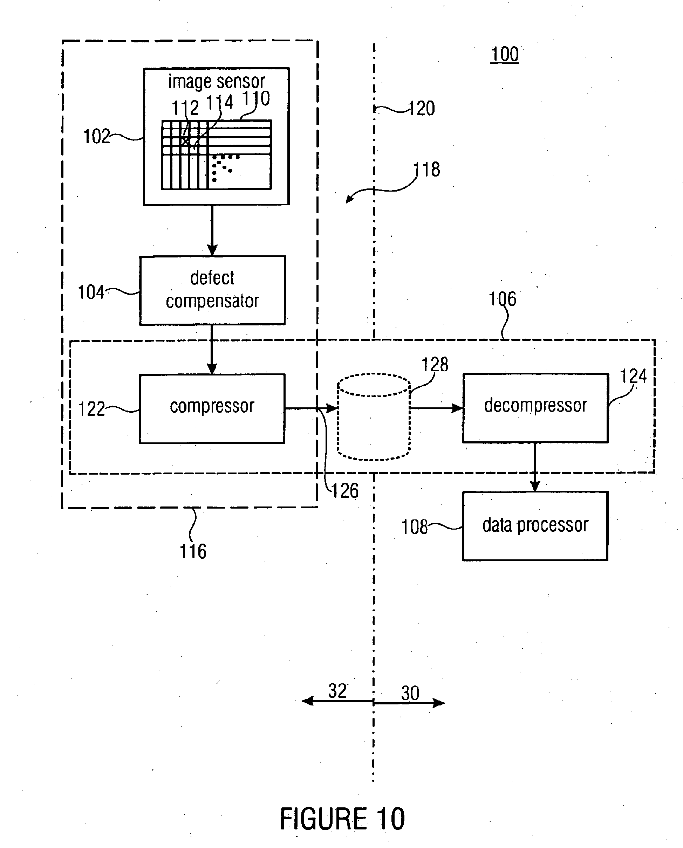

Before describing the preferred embodiment of the present invention in more detail below with respect to Figs. 9c and 10, a discussion on two basic workflow strategies is provided next with then explaining the details of some elements of a camera image processing pipeline and highlighting some of these elements and their significance within a possible quality enhancement achieved by the preferred embodiment described afterwards.

In particular, as the following preliminary discussion will show, the preferred embodiment outlined below enable shifting some of the typical image rendering algorithms from within the camera to an off-camera processing. The following discussion will show that apart from reducing the camera complexity, the preferred embodiment described afterwards enhance the resulting image quality significantly.

1. Workflow Strategies

In this section, two basic strategies for implementing a camera workflow are looked at. The traditional three component RGB workflow is used as a starting point and its drawbacks are discussed. Then, a raw workflow is introduced in order to explain possible application scerieries.

1.1 Traditional Three Component RGB Workflow

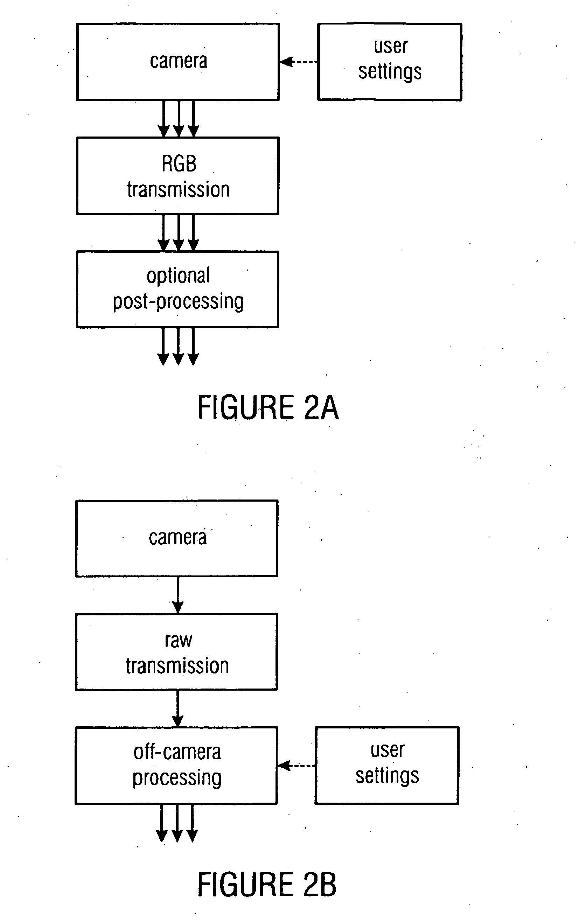

The traditional three component workflow in a digital camera is shown in Fig. 2 a), which consists of three major steps, namely (i) image acquisition, (ii) data transport or storage, and (iii) optional post-processing. During acquisition, the camera directly creates a three component image. An RGB, XYZ or YCbCr color space is typically used for representing colors. RGB will be used below as a synonym for these color spaces, since the camera sensors typically acquire red, green, and blue pixels. For reducing the amount of data to transport and store, the image might be compressed.

Since a huge number of processing steps, such as color reconstruction or defect pixel correction, for example, are already applied in the camera, all decisions that influence the processing and reconstruction pipeline need to be known at the camera during recording. These decisions are baked into the images; some of them are hard to change afterwards. In media production it is common to apply additional off-camera processing. For example, additional color adjustments are carried out.

1.2 RGB Workflow Discussion

The RGB workflow depicted in Fig. 2a shows three major drawbacks that are rooted in the high computational effort of the image processing algorithms necessary to achieve high quality images: (i) the camera requires complex hardware, (ii) the flexibility in adjusting the acquisition parameters is low, (iii) and the achievable image and video quality is limited.

In more detail, algorithms such as the reconstruction of colors from the CFA data or defect pixel correction can be very computational demanding. Simpler algorithms, by contrast, do not provide the same quality as shown below. Consequently, either image quality has to be sacrificed, or extremely high hardware effort has to be spent. While embedded systems, and thus also digital cameras, are getting more and more powerful, the required hardware is expensive. Given the rather low volume of high quality cameras, ASIC technology does not really solve the problem of building cheap, small and energy efficient cameras.

In addition to these quality and complexity issues, flexibility is reduced as well, since a lot of processing is required inside the camera. Consequently many decisions are already baked into the image, such as the selection of the demosaicing algorithm [14], for example. Since both the color interpolation and the possible compression are not reversible, these decisions cannot be undone. Consequently, best image quality can be achieved only by taking optimum decisions during acquisition, which is difficult to achieve, however, because of time pressure and limited display quality on mobile devices.

1.3 Raw Data Workflow

Most of the drawbacks identified in Section 1.2 are due to the concentration of the video processing in the camera. However, a full quality image is typically only required at some later time in post production, or using special preview stations. Put differently, at the point of taking the picture there is no need for having the full image quality straight away. To avoid the drawbacks of the RGB workflow, the camera therefore only creates an almost unprocessed image when using raw workflows as shown in Fig. 2b. Consequently, decisions are not yet baked into the data, and most processing and reconstruction happens off-camera. More specifically, the user is not limited to the processing chain implemented by the camera manufacturer, but can select an optimized variant delivering better results [12].

One disadvantage is that the exchange of data between different devices and institutions requires a standardized and open file format for video data. While multiple formats exist for traditional three component workflows, solutions for CFA video data are mostly proprietary. Fortunately, this starts to change with the development of the CinemaDNG format [1].

1.4 Application Scenarios for Raw Workflows

In summary, there are two major application scenarios which can profit from a consistent raw workflow, the first one comprising video productions with very high quality demands. The possibility to use the best available image processing algorithms combined with the increased flexibility helps increasing the quality in the postproduction.

The second scenario covers applications where low complexity is a major concern while still achieving good image quality, which might be due to cost, weight and battery life. Using a raw workflow provides the advantage of reduced data volume to transport. Lossy compression can be applied so as to further reduce the data volume. This is particularly interesting since recent research demonstrated that compression before demosaicing can lead to better quality compared to traditional workflows [11, 3]. In addition, the computation power of general purpose computers used to process the images is much less expensive than when integrating it into an embedded system such as a digital camera.

It should be noted that this application scenario also includes live workflows. The present broadcast van controlling the image acquisition can offer a much higher processing power compared to an embedded camera. Raw workflows are thus also beneficial for electronic field production (EFP) and electronic news gathering (ENG) type scenarios.

1.5 Discussion

As was mentioned earlier, raw workflows improve the traditional RGB approach by reduced camera complexity, better quality and more flexibility. Despite this, most video acquisition still uses the traditional scheme because the cross-vendor compatibility between the different equipment is still difficult. In this context, CinemaDNG [1] has the potential to improve the situation. On the other hand, a large number of technical aspects still remain to be explored. In order to support the adoption of the raw workflow, these issues will be investigated next. In particular, an analysis will be made as to which processing steps can be moved from the camera to the post-production and how this helps to increase quality.

2. Analysis of Processing Pipeline Elements

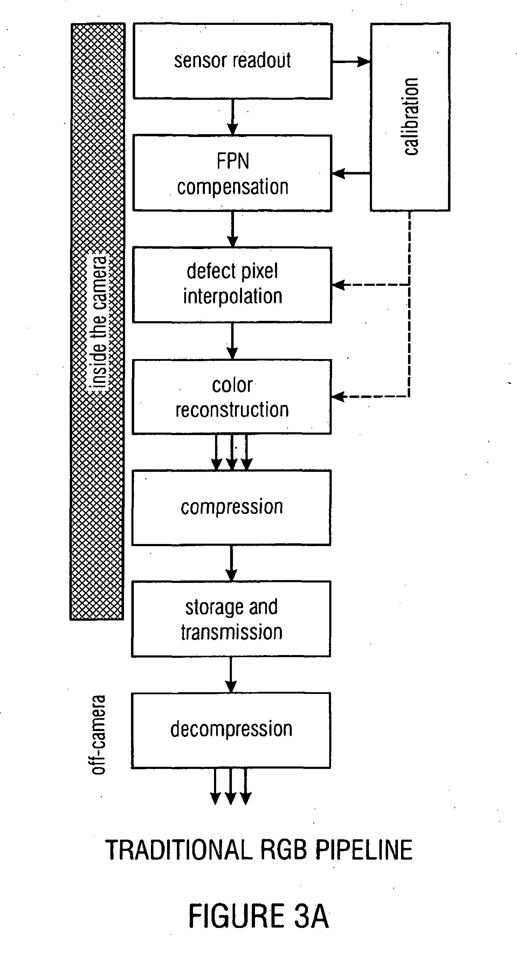

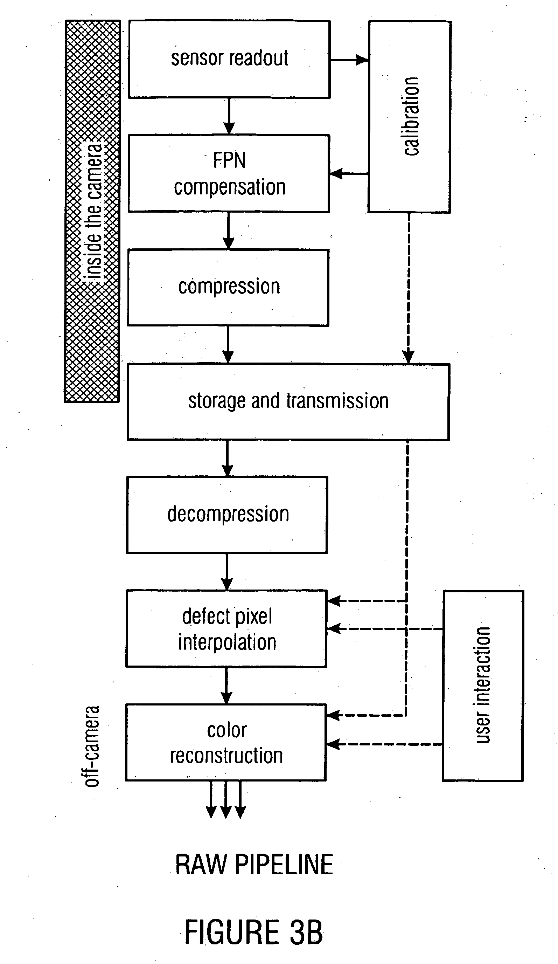

In this section a closer look is taken at the signal processing operations required for above workflows. Fig. 3 depicts the image processing pipeline for a) an RGB workflow and b) the raw workflow. Both the traditional and the raw workflow have very similar building blocks. The arrangement of the blocks was chosen on the basis of the requirements in terms of complexity, calibration data and desired user interaction. In the following sections these building blocks will be discussed, and it will be shown why some blocks should to stay inside the camera while others could be moved outside.

In particular, Fig. 3 shows an image processing pipeline of a) a traditional RGB based camera arid b) a raw camera system. The building blocks are mostly the same but are arranged in a different order. This shifts complexity from the camera to an off-camera processing stage as described below.

2.1 Fixed Pattern Noise (FPN) Compensation

Compensation of FPN has a special role as these algorithms rely heavily on camera-specific calibration data. Compensation is therefore closely tied to the image sensor and current operating conditions of the camera. The origin of FPN can be explained as follows: Image sensors are made of many very tiny transistors and analogue circuits. Despite manufacturing tolerances being really tight and manufacturing is quite precise, each and every transistor will be slightly different from its neighbor. These tiny variations will cause the response from one pixel to the next to be quite different [6]. Luckily, these nonuniformities are quite stable and can be calibrated and removed.

2.1.1 Noise Sources

Acquisition of the real scene information $I(x, y)$ for each pixel $(x, y)$ may be modeled as described next. The measured signal $\tilde{I}(x, y)$ is corrupted with noise:

$$\tilde{I}(x, y) = I(x, y) + N_{\text{fixed}}(x, y) + N_{\text{dynamic}}(x, y) \qquad (1)$$

The fixed pattern noise $N_{\text{fixed}}$ can be separated into three major types of FPN distortions that are common in image sensors:

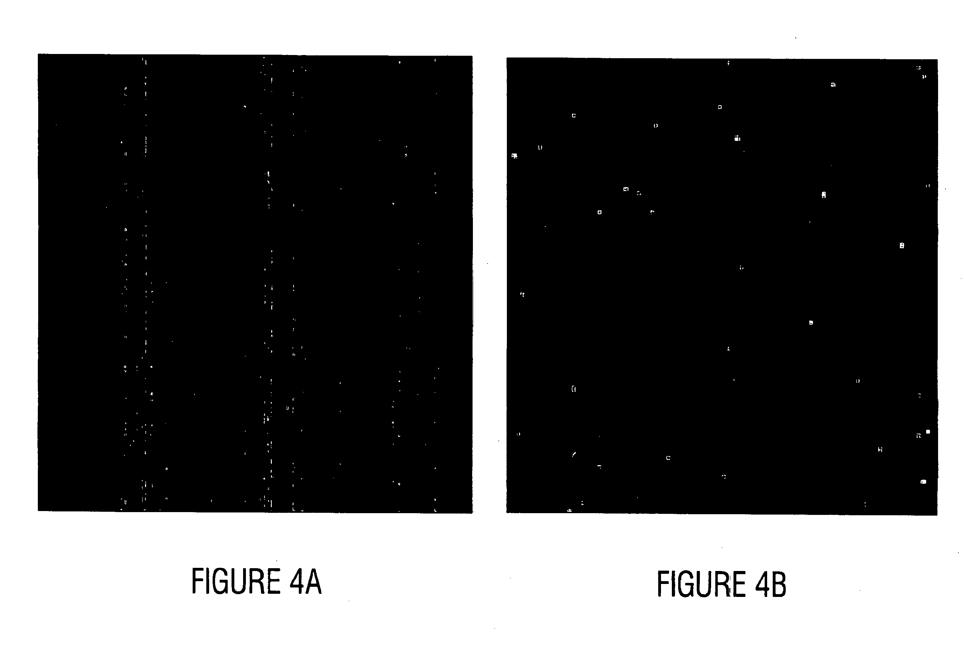

- *Offset FPN* or *Dark Signal Non-Uniformity (DSNU)* is one of the strongest noise sources in an image sensor and describes a variable black level of each pixel. Without light and exposure time $\tau_{\text{exp}} = 0$ there will still be some non-zero response. Fig. 4 a) shows an example of typical offset noise. We can see both a pixel-wise noise pattern as well as a column wise pattern [6].

- *Dark Current FPN* is the result of a leakage current within the pixel. Without any light a pixel will fill up with increasing exposure time $\tau_{\text{exp}} > 0$. Fig. 4b depicts ann example of typical dark current FPN. It can be seen that most pixels behave in a uniform manner. Only few pixels have a high dark current and are highly visible as bright spots; said bright pixels are not defect and still deliver valuable image information.

- *Photo Response Non-Uniformity (PRNU)* describes a variable photo response per pixel. This may be due to variable sizes, micro lens placement or even slightly different quantum efficiency for each pixel [4].

The time varying dynamic noise $N_{\text{dynamic}}$ [23] is usually much weaker for a good hardware design and this aspect is not discussed further.

2.1.2 Compensation Procedures

Unlike dynamic noise, the FPN does not change from frame to frame. Unfortunately, it is not fixed either but only little change over time and operating conditions can be assumed. This enables estimation of the noise $\hat{N}_{\text{fixed}}$ and makes the actual compensation of FPN quite simple. FPN can be compensated by simply subtracting an estimate of the FPN $\hat{N}_{\text{fixed}}(x, y)$ for each pixel [13]:

$$\hat{I}(x, y) = \tilde{I}(x, y) - \hat{N}_{\text{fixed}}(x, y) \qquad\qquad (2)$$

An estimation algorithm referred to as *Column Drift Compensation* (CDC) in [18] has been analyzed for estimating offset FPN $\hat{N}_{\text{offset}}$. The problem is that a small variation in camera temperature results in additional noise patterns in the image. In the context of cameras without temperature stabilization, a calibration frame would hardly be usable. The proposed CDC uses just a single fixed reference frame and adjusts for this type of temperature drift at runtime. A slow but steady adjustment of the calibration data is performed based on drift estimates from a few reference rows on the sensor. A high frame rate and a high image quality may be achieved, as shown in [18] a.

In addition, the compensation of dark current FPN $\hat{N}_{\text{dark}}$ has been analyzed. One has found that dark current FPN is linear with exposure time $\tau_{\text{exp}}$ but can be slightly non-linear for some pixels. In this case, a calibration data set for linear compensation [17] is suited only for a limited range of exposure times. This effect has been analyzed in [20], where the use of multiple sets of calibration data to extend the range of exposure times was proposed. The resulting compensation is still of very low complexity as it requires only a single multiplication and a single addition per pixel.

With some sensors a compensation method is implemented directly within the sensor. For example, one can often find the *Correlated Double Sampling* (CDS) operation mode [25] which renews the estimate $\hat{N}_{\text{offset}}$ for each frame. Frequently, the camera designer has only limited access to the details of the sensor operation and, eventually, only limited choice for the FPN compensation algorithms. In case the options are available, the image quality and the usable operation modes of a camera can be greatly enhanced by these algorithms. The higher order models are still of very low complexity and can be executed with just a few operations per pixel. They are well suited for implementation into the camera.

2.1.3 Discussion

All of the FPN is sensor specific and changes with operating conditions (e.g. temperature or exposure time). This poses different challenges: The compensation requires multiple parameters per pixel. In many cases, a full set of calibration parameters is much larger than the actual image data. As the examples in Fig. 4 illustrate, the patterns are spatially random. Compressing and transmitting this calibration data along with the images would be both hard and expensive. Therefore, the calibration should be applied on the raw camera images directly and within the camera.The complexity of a FPN compensation is quite low, as was illustrated above. Even the sophisticated models require only few ADD operations per pixel. The effort for per- forming the compensation compared to handling all the data and performing the compensation offline is much lower. Therefore, the compensation of FPN should clearly be performed within the camera.

2.2 Calibration Data

Within a camera system there can be many different types of calibration data. This data is camera specific, therefore it needs to be available with and within the camera. The largest set is the calibration data for FPN compensation as discussed above. Multiple parameters for each pixel are common.

In addition, there is calibration data for defect pixels. The storage requirements are much lower as there are only few pixels within a sensor which are defect. This information can easily be transmitted as metadata along with the image. There is almost no change from frame to frame; calibration data could even be shared for multiple files in a sequence. Further calibration data could include color information and spectral response curves of the sensor. Again, these data sets are small compared to the image data and can easily be transmitted along with the images.

2.3 Defect Pixel Interpolation

Another important aspect of high-end cameras is the handling of defect pixels. Among the millions of pixels of a typical image sensor there are often some that are not working properly. These pixels need to be declared as defect and need special treatment. The location of these pixels can be extracted from offset FPN [16], dark current FPN [9] and gain FPN [10] calibration data. As was shown in [19], the compensation of defects needs to be performed before demosaicing since demosaicing would spread the error among a larger region.

2.3.1 Defect Interpolation Algorithms

Interpolating defect pixels is a difficult task. Due to the Bayer pattern [2] in the image server with the Bayer pattern serving as an example for a CFA pattern, the direct neighbors are of a different color and pixels of the same color are further away. The aim is to combine the color information of pixels of the same color. Additional enhancement comes from the edge information of pixels of other colors. With multiple defects close to each other the situation gets even worse as an algorithm needs to adapt to ever changing conditions.

Different existing algorithms are analyzed in [19]. We specifically focus on analyzing the performance for situations with multiple defects close to each other. The most widely used algorithms include nearest neighbor (NNR) [16], linear filtering [9] and median filtering [24]. The adaptive defect correction (ADC) [22] estimates directions of edges and interpolates accordingly. They all have proven to perform well in smooth image regions. Along edges they are far from perfect and the restored image often shows artifacts.

2.3.2 Sparsity-based Defect Interpolation

In [19], a new method for compensation of defects has been proposed which is based on the sparsity assumption: transformation of an image to a transform domain can be represented with only few coefficients. These transform coefficients can also be found if only part of the signal is known. It has been found that a sparse representation can also be estimated for camera raw data and that a defect interpolation based on the *complex-valued Frequency Selective Extrapolation* (cFSE) [21] works very well.

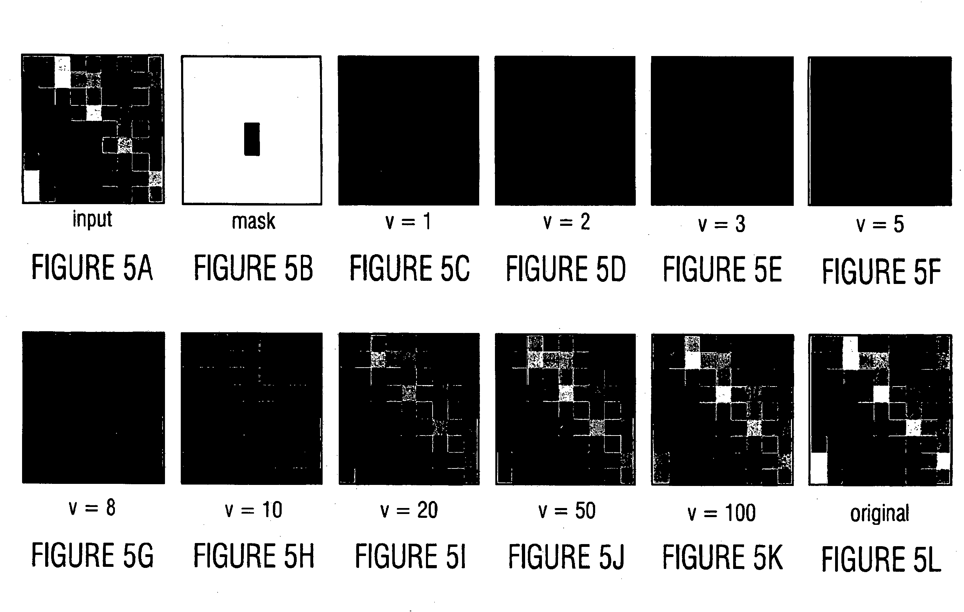

For defect interpolation a small block of image data as shown in Fig. 5a with known defect locations as shown in b) is used. The cFSE algorithm iteratively updates the sparse model

$$g[m,n] = \sum_{k\in\mathfrak{K}} c_k \varphi_k[m,n]$$

by selecting and updating a single coefficient $c_k$ in each iteration v. The basis functions $\varphi_k$ of the discrete Fourier transform as proposed in [21] were used. The set $\mathfrak{K}$ holds the indices of all basis functions used for model generation.

Fig. 5b to k depict the behavior along the iterations. As is shown, with the adjustment of one frequency at a time, the whole region is modeled and reconstructed. The model is also valid for the missing pixels. After 100 iterations we can copy the missing pixels back to the defect image. In Fig. 5l the original image data can be seen. The model accurately depicts the missing pixels.

This algorithm has many advantages: The number and location of additional nearby defects can directly be handled with this algorithm. Consequently, no adjustment is necessary. The information from all pixels within the current block is taken into account and contributes to the reconstruction of the missing pixel. No assumption on the Bayer pattern had to be included. The algorithm is not tailored to the specific color of the pixel to be reconstructed; it works just as well for any regular color filter array pattern.

2.3.3 Simulation and Results

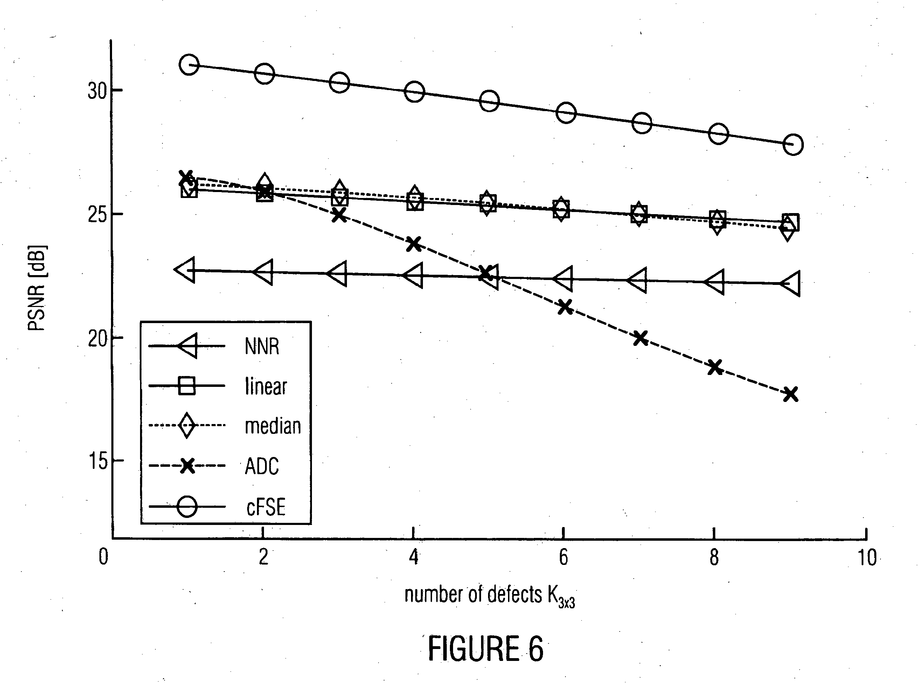

Simulations for the 24 Kodak test images [5] have been performed and a variable number of defects have been inserted. The cFSE was executed with 100 iterations, a 9 x 9 block size, decay factor p = 0.5, orthogonality correction y = 0.5, and DFT basis functions of size 12 x 12. Please refer to [21] for discussion of parameters and source code of cFSE. Fig. 6 shows the Bayer-PSNR values for the interpolated defects. In contrast to [19], a defect cluster size of $\mathscr{D}$ = 3 x 3 pixels has been used. The horizontal axis shows the number of defects $K_{3x3}$. It can be seen that cSFE outperforms the traditional methods by a significant gain. As has been expected, all algorithms decrease in quality as the number of defects increases. On average, cFSE gains 4.7 dB for isolated defects and 4.5 dB for 1-5 defects in a 3 x 3 region.

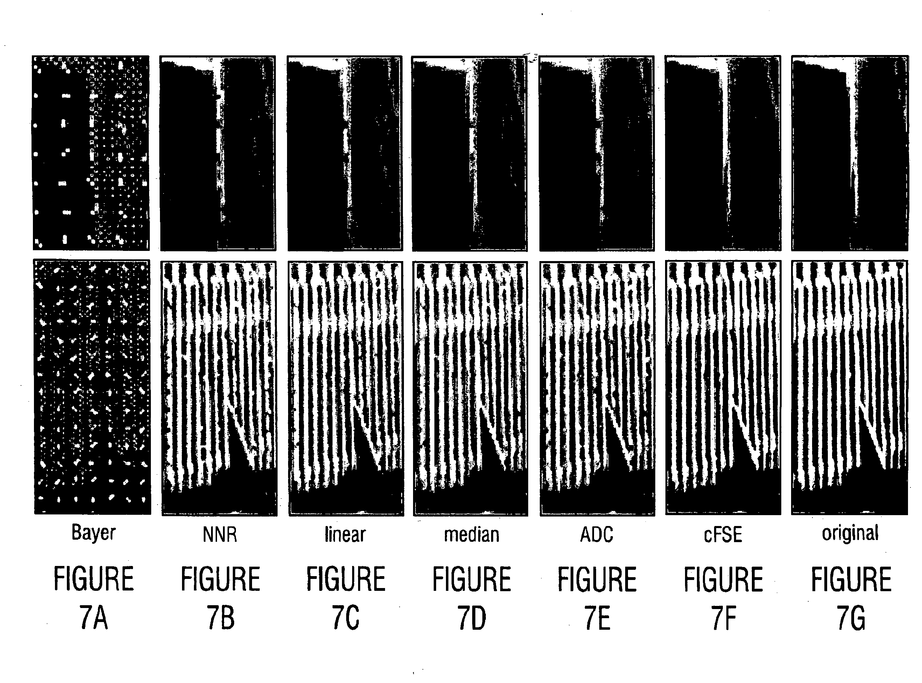

For visual results the AHD demosaicing algorithm can be further applied to the Bayer raw images. Fig. 7 shows some cut-out of the final images for defect interpolation with the discussed methods. As one can see, all traditional methods leave artifacts along edges. These distortions are highly visible after demosaicing. The cFSE method does not show these artifacts. The visual inspection confirms the numeric gains.

2.3.4 Discussion

There is a price to pay for the high gain in image quality of 4.5 dB. The cFSE algorithm is much more complex and as reported in [19] some 5000 blocks can be processed per second in a single-threaded PC implementation. This is fast enough for offline processing of images but the complexity is much too large for realtime compensation of video in mobile camera systems. Therefore, the algorithm is well suited for restoring the best possible quality in an off-camera processing step.

### 2.4 Color Reconstruction

The interpolation of Bayer pattern raw images to a full RGB image is a widely researched topic. Using just a linear interpolation results in a lot of unwanted distortions. The result of a simple bi-linear interpolation is shown in Fig. 1b. The image shows color and zipper artifacts along the edges. This is clearly not the desired result from a high-end camera system. The interpolation with the *Adaptive Homogeneity-Directed* (AHD) demosaicing algorithm [8] does not show these artifacts as shown in Fig. 1c. Still, for some test cases even this result can be improved upon. Among other famous algorithms like an approach based on alternating projections [7] there is still a large activity in the research community. For example, a new approach based on compressive reconstruction has been proposed just recently [15]; this shows that there is still some improvement to be gained.

In comparison with linear interpolation, these approaches are of much higher complexity and cannot be used in realtime in a mobile camera system.In the raw data workflow, however, it would be possible to utilize these algorithms and spend more processing power outside the camera.

### 2.5 Image Storage and Compression

In contrast to the other elements, the storage and compression for RGB workflows differs from raw workflows. Two cases need to be distinguished:

Firstly, there is the lossless or uncompressed operation. A lot of high quality media production scenarios rely on best quality without any compression. This results in fast SSD based recorders and the use of uncompressed video transmission lines based on HD-SDI. In these cases, the raw workflow produces only 1/3 of the amount of data since the demosaicing process interpolates two additional values for each measured pixel intensity.

Secondly, there are still situations where the amount of data exceeds the band-width of the transport channel. In these cases the use lossy compression is mandatory. While this might be counterproductive for applications requiring utmost quality, complexity driven scenarios can profit from such an approach as discussed in Section 1.4. In particular, quality gains compared to three component compression are reported in existing literature [11, 3]. This is an additional gain in image quality compared to the previously discussed raw workflows.

Since a color camera outputs CFA data instead of RGB pixels when applying a raw data workflow, also the compression algorithm has to deal with this type of data. However, as adjacent pixels of CFA images belong to different colors, the traditional RGB compression algorithms do not work well any more and new algorithms need to be introduced: One possibility of doing so is to apply a special wavelet transform scheme within JPEG 2000, the so called SPACL decomposition. In essence, [26] demonstrated that an additional two dimensional wavelet transform applied to CFA data separates the high frequency pattern into different subbands. Therefore, they can be compressed similarly to ordinary images within the JPEG 2000 standard. While this approach does not yield the best achievable compression ratios, it offers the major advantage of fully relying on a standardized and open file format, which promises quick applicability.

### 3. Conclusion

Thus, the above sections have analyzed the image processing of camera systems and the question of handling the data . Two major strategies have been discussed, one of which relies on in-camera processing in contrast to off-camera processing. The basic strategies of an in-camera RGB workflow have been compared with the off-camera raw data workflow. The raw workflow directly offers the advantages of lower in-camera complexity and improved user interaction for the processing of images. The corresponding image processing pipelines have been analyzed more closely: Among the elements, fixed pattern noise (FPN) is one of the components that should be handled in-camera. Even when using the advanced FPN compensation algorithms the complexity is quite low. With regard to the defect pixel interpolation, the cFSE algorithm achieves superior quality but also comes at a high complexity. Along with demosaicing for color reconstruction, said algorithms should be executed off-camera.

Summarizing the above, image and video processing algorithms have traditionally started from an RGB image. However, current image sensors deliver camera raw data that needs additional processing and interpolation for conversion into an RGB representation. While recent research has been able to deliver important improvements in achieved image quality for processing and reconstruction of raw images, these algorithms come with high computational complexity. As a result, they are not suited for mo-bile solutions such as cameras for media production, mobile phones or surveillance. In contrast, offline processing offers both higher computational power and better flexibility and is well suited for executing those algorithms. Thus, the workflow for utilizing this enhanced quality requires a shift from camera centric imaging to new off-camera processing strategies. This requires a novel infrastructure for transportation and interchange. It enables the possibility for development of even more sophisticated algorithms for processing of camera raw data. The above sections highlighted the challenges and possibilities arising from the above mentioned paradigm shift. Both algorithms that should stay within the camera and algorithms that benefit from offloading have been discussed. The result is an increase in image quality of workflows for future video applications.

Thus, the above sections showed that image rendering in cameras requires high computational power. However, the complete image in high quality is not yet needed immediately after the imaging capturing process and directly within the camera. Often, it is sufficient if the complete image at high quality is available at some time after the image capturing. This circumstance is exploitable within the raw data workflow. In case of the raw data workflow, the camera merely provides raw data, and any complex data rendering is performed afterwards externally from the camera where, in most cases, more computational power is available. Consequently, the camera requires far less computational power and is more easily constructible, with less weight and cheaper. The basis of the raw data workflow has been described above. Raw data workflow comprises further advantages: it is possible to use better algorithms. By this measure, images within an even higher quality may be reconstructed.

What has also been described above is that even in case of the raw data workflow, it is favorable to compress the data of the image sensor. Adapted compression algorithms may be used to this end. They may be lossy or loss-less. In the lossy case, the image data is, for transmission purposes, represented in a lossy way with minor quality degradation which is almost invisible. That is, the compression is lossy but visually lossless or near-lossless. Figs. 2a and 2b showed the most important processing elements of both workflow types, respectively. The most prominent difference is the arrangement of the elements and, in particular, the arrangement of the compression performed within the transmission. In case of the traditional RGB workflow shown in Fig. 2a, color images such as, for example, RGB, are processed by the compression. They have already been obtained by complex processing involving, inter alias, defect pixel compensation. In case of the raw data workflow shown in Fig. 2b, the camera raw data is subject to the compression performed within the raw data transmission. That, at the time of compression, the image has not yet been subject to complex processing. For example, the image sensor obtained by image capturing at the camera is in a CFA format, such as in a Bayer pattern.

What has been neglected in the above discussion is that problems occur with regard to the compensation of the defect pixels mentioned and discussed in section 2.3. Recall that the above discussion investigated the possibility of performing the compression (which may be lossy) within the raw data workflow of Fig. 2b prior to the defect pixel compensation which was assumed to be shifted to the off-camera processing. Due to this, however, errors occurring at these defect pixels in the image are smeared out and are no longer clearly localized. The error at the defect pixel positions is distributed over, or extended to, a greater image area. The defect pixel compensation would have to correct a greater image region and would, therefore, be principally more difficult and likely lead to a lower quality. Even if the compression is loss-less, however, the defect pixel positions negatively effect the raw data workflow: the defect pixels increase the entropy which, in turn, degrades compression efficiency. Imagine, for example, a spatial decomposition based compression technique, such as using a Wavelet, DCT or FFT, which seeks to unite the signal energy within less coefficients than the number of original image samples. In that case, the defect pixels counteract this aim by introducing signal energies at higher spectral components which renders the compression more difficult.

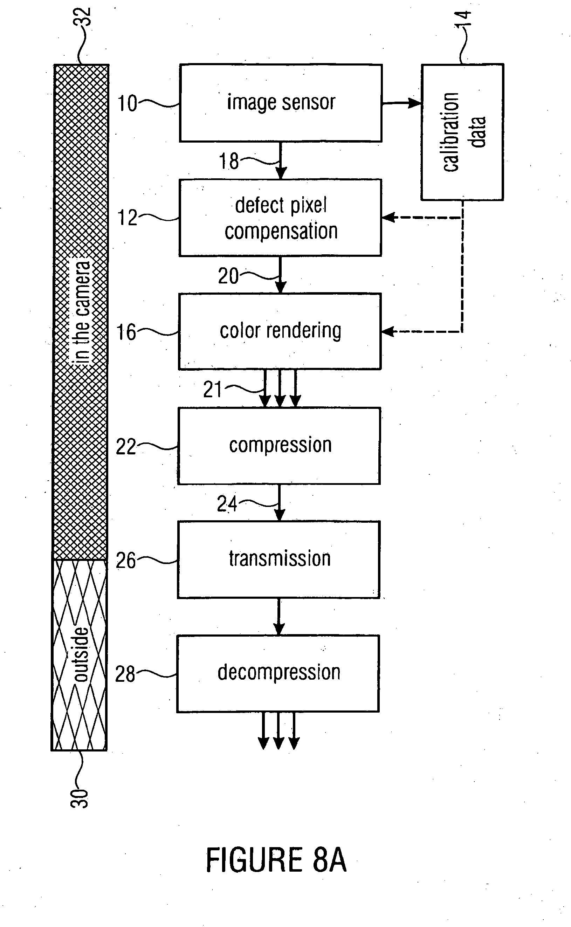

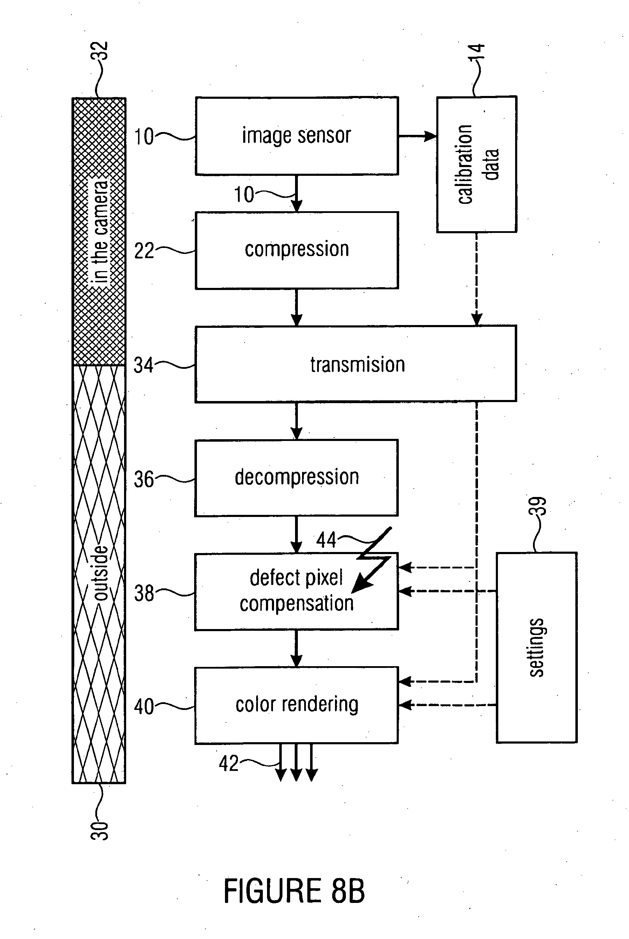

Figs. 8a and b show the processing elements in the workflows of Figs. 2a and 2b in more detail similar to Figs. 3a and 3b while paying, however, increased attention to the relation between defect pixel compensation on the one hand, and compression on the other hand. As can be seen, in case of the traditional workflow, the image acquisition 10 is followed by a defect pixel compensation 12 which uses calibration data 14 just as the color rendering 16 does, which is performed thereinafter. That is, while the captured image 18 and the compensated image 20 are raw images in, for example, CFA format, the output of the color rendering is a multiple component image 21 onto which conventional compression 22 may be applied. The compressed image 24 is then transmitted and optionally stored at 26 in order to be decompressed at the domain 30 outside the camera differing from the camera domain 32. As described above, defect pixel compensation 12 has to be either computationally complex in order to avoid error spreading because of a lossy nature of compression 22, which alternative is unwanted due to the related costs, power consumption and the like, or the compression 22 has to be lossless, which is unwanted because of the resulting high transmission rate resulting therefrom.

Fig. 8b shows the processing elements involved in the raw data workflow so as to compare the arrangement of these processing elements with a case of the conventional workflow of Fig. 8a. As can be seen, in accordance with the raw data workflow, the raw image 18 captured at 10 is directly compressed 22 within the camera, i.e. within the camera domain 32. The compressed image, thus, is a compressed version of this raw image and is transmitted at 34 to the outside domain 30 along with calibration data 14 such as the indication of defect pixel positions. Subsequent to transmission 34, the compressed image is subject to decompression 36, whereinafter defect pixel compensation is performed at 38 depending on the calibration data 14 and optional settings 39 steering, for example, the defect pixel compensation details. The compensated image is then subject to color rendering 40 which, in turn, might also be controlled by calibration data 14 and settings 39 so as to yield the final multiple component image 42. As can be seen, the compression 22 is performed upstream relative to the defect pixel compensation 38 so that, as indicated by flash symbol 44, the defect pixel compensation 38 hardly results in high quality results due to the smear-out effect of the compression 22 which, due to its lossy nature, spreads out the error at the defect pixel position. Even in case of a lossless compression, the defect pixels negatively cooperate with the compression: the compression ratio is degraded due to the above entropy increasing effect of defect pixels.

In accordance with the preferred embodiment of the present invention described further below, the above problem described with respect to Fig. 8b is resolved by exploiting the diversity of available defect pixel compensation algorithms. More simple algorithms of lower complexity, which are based, for example, on linear interpolation, merely achieve a moderate compensation result, but at a very low complexity. However, substantially more expensive algorithms are also available, with these more expensive algorithms leading to a better quality. The complexity involved with the latter algorithms is, however, to high for the use within the camera itself.

Figs. 9a to 9c are intended to motivate the preferred embodiment described further below, the advantages of this embodiment and how this embodiment overcome the above problems. See, for example, Fig. 9a. Fig. 9a shows a possible solution to the problem described above with respect to Fig. 8b. The solution shown in Fig. 9a suggests performing the defect compensation 38 upstream relative to the compression/transmission 46 involving, as described above with respect to Fig. 8b, processing elements 22, 34 and 36. However, due to the performance of the defect pixel compensation 38 within the camera domain 32 the available computation power is limited, and accordingly merely simple algorithms may be applied.

Fig. 9b suggests solving the above-outlined problem with regard to Fig. 8b by leaving the order among transmission 46 and defect pixel compensation 38 unchanged, but designing the transmission 46 in a lossless manner such as, for example, by omitting any compression and corresponding decompression 36 from the transmission 46 as illustrated by the striking through line 48. That is, the sensor raw data is not, or merely losslessly, compressed. By this measure, all further steps may be performed outside the camera, i.e. in domain 30, just as the defect pixel compensation 38. However, the transmission channel involved in transmission 46 has to cope with the increased data rate for passing the data from the image sensor to outside 30.

With regard to Fig. 9a, it is to be additionally noted that the compression of images with defect pixels degrades the compression rate otherwise available by the compression algorithm. The observation of this effect is, for example, mentioned [27] and has already described above. The solution which the below-outlined preferred embodiment of the present invention follow is illustrated in Fig. 9c. As illustrated therein, a two-stage compensation of defect pixels is used. Within the camera 32, a first defect pixel compensation 50 is performed which may be implemented in a simple manner, such as by linear interpolation. By this measure, the negative effects of the defect pixel positions due to, or onto, the subsequent compressed transmission 46, are thereby effectively avoided due to the lowpass nature of the interpolation underlying compensation 50. The complexity of compensation 50 may be kept low.

After the compression of compressed transmission 46, the defect pixels may then be corrected in a second compensation 52. For example, the first interpolation result for filling-in the defect pixel position according to compensation 50 is discarded at defect pixel compensation 52, and a new value for the defect pixel position is determined and inserted at the respective position at 52. Since the defect pixel compensation takes place outside the camera, i.e. at outside domain 30, more complex and better algorithms may be used.

Thus, on the basis of the above thoughts, Fig. 10 shows an example for a camera apparatus taking advantage of the above thoughts. The camera apparatus of Fig. 10 is generally indicated with reference sign 100. It comprises an image sensor 102, a defect compensator 104, a data transmitter 106 and a data processor 108, all of which are serially connected to each other in the order they have just been mentioned.

Regarding the possible implementations of the individual modules 102 to 108, reference is made to the above discussion. For example, the image sensor 102 may be a CCD or CMOS sensor composed of an array of pixel cells. The image sensor 102 is configured to capture an image 110 which, for the reasons set out above, has a defect pixel position 112. It should be noted that the defect pixel position 112 merely serves as a representative, and that, of course, more than one defect pixel position may exist, such as clusters of defect pixel positions or individual, spaced-apart defect pixel positions. As described above, defect pixel positions correspond to pixel sensors of the image sensor 102, the output of which does not fully depend on the scene captured, but is, for example, stuck at a certain value or the like such as due to a short circuit, a line interruption or the like. A pixel might also be declared defect if it is of low sensitivity to light or experiences other intermittent distortions.

The defect compensator 104 is configured to subject the image 112 to a first defect compensation, which defect pixel compensation has been provided with reference 50 in Fig. 9c. The result is a preliminarily compensated image having the defect pixel position 112 interpolated.

The data transmitter 106 is configured to transmit the preliminarily compensated image via compression to the data processor 108. As described above, due to the first defect compensation performed by compensator 104, the compression rate of the compression of data transmitter 106 is not negatively affected by the defect pixel position 112, and in case the compression is lossy, surrounding non-defect pixel positions, such as representatively indicated at 114, are additionally prevented from being corrupted by the defect pixel position 112, thereby enabling high-quality defect compensation at data processor 108. The data processor 108 is configured to perform such second defect compensation onto the transmitted image with this defect pixel compensation having been mentioned above with respect to reference sign 52 in Fig. 9c, for example.

Favorably, as described above, the complexity of the first defect compensation performed by compensator 104 is chosen to be lower than the complexity of the second defect compensation performed by data processor 108. For example, the first defect compensation may involve a linear interpolation, whereas the second defect compensation 52 involves a non-linear or frequency selective extrapolation based interpolation, such as the above-outlined (c)FSE. With regard to the FSE, reference is made to [19].

Accordingly, the image sensor 102 and the defect compensator 104 may be arranged within a camera housing 116, while the data processor 108 is arranged outside the camera housing 116. The camera 118, to which the camera housing 116 belongs, may, for example, be portable although the camera 118 may also be of a stationary type. Thus, as indicated by the dash-dot line 120, the image sensor 102 and defect compensator 104 may be arranged within the camera domain 32, whereas the data processor 108 may be realized within the outside domain 30. Accordingly, the tradeoff between computational complexity on the one hand and achievable quality or quality performance on the other hand may be made differently for the defect compensator 104 compared to the data processor 108. For example, the processing power for realizing the data processor 108 within the outside domain 30 may already be available in form of, for example, a general-purpose computer or the like, on which a software program realizing the functionality of the data processor 108 runs. The defect compensator 104, in turn, may be realized in hardware or in firmware, i.e. programmable hardware. Although the complexity of the defect pixel compensation 50 performed by compensator 104 is low, it is far enough in order to avoid the negative effects on the compression rate and the achievable image quality at the data processor 108 as outlined above.

For example, the defect compensator 104 may, as mentioned above, merely perform a linear interpolation in order to fill the corresponding gap in the image 110 at the defect pixel position 112. Irrespective of the interpolation type used, defect compensator 104 may be configured to, within the first defect compensation, restrict the interpolation modification to the very defect pixel position 112 in order to merely locally interpolate the image 110 at the defect pixel position 112 while leaving the image at the surrounding non-defect pixel positions 114 unchanged. This enables the data processor 108 to obtain a version of the originally captured image 110, which has been modified relative to the original version as little possible, namely merely with respect to the defect pixel positions or slightly beyond the positions due to a mossy nature of the compression (if any). Thereby, the interpolation expense is restricted to the local portions of the image where the defect pixel position 112 is.

As illustrated in Fig. 10, the data compressor 106 may be implemented by a serial connection of a compressor 122 and decompressor 124. As described above, the compressor 122 may be configured to perform lossy compression onto the preliminarily compensated image, although compressor 122 may also perform a lossless compression. The camera 118 may comprise an output interface 126 at which the compressed image is output to outside the camera 118. The decompressor 124 reverses the compression, i.e. reconstructs the preliminarily compensated image, wherein the reconstruction may, in case of lossy compression, slightly deviate from the preliminarily compensated image as already described above. The compressor 120 may, for example, be implemented as hardware or firmware, whereas decompressor 124 may, for example, be realized as a software program running on a computer along with, for example, a software program realizing the functionality of the data processor 108. Alternatively, decompressor 124 may also be implemented in hardware or firmware.

As illustrated in Fig. 10, the data transmission realized between compressor 122 and decompressor 124 may be with or without temporal storage of the compressed data in an optional storage 128. Such optional storage 128 may be positioned inside or outside the camera 118, i.e. inside or outside the housing 116 although in Fig. 10 the outside position is shown. Storage 128 may, for example, be a hard drive, another non-volatile memory or even a volatile memory.

Examples for potential types of the compression used by compressor 122 and decompressor 124, respectively, have already been mentioned above with respect to the preceding figures, and accordingly references is made to the respective portions. Inter alias, JPEG 2000 based codecs may be used.

As has also been described above, the image sensor 102 may be a color image sensor for capturing, for example, color raw images captured using a CFA, i.e. any lateral regular or irregular distributions of sample positions of different color components so that, per sample position, merely one, or at least less than three, color components is available. The preliminarily compensated image and the transmitted image transmitted to data processor 108 may, thus, also be color raw images and the data processor 108 may be configured to perform a demosaicing for color reconstruction onto the transmitted image. To this end, reconstruction algorithms as described above in section 2.4 may be used. However, it should be noted that all of the above examples are also favorably usable with grayscale image sensors and image sensors which already provide complete three-components color images. Further, it should be mentioned that there are also image sensors with more than three different color component types/color filters, and sensors measuring the polarity per pixel, and although the latter pixels thereof have varying characteristics and sensitivity, same are not "coloured". Nevertheless, above examples are advantageous with sensors of all of these types.

For the sake of completeness, it is noted that the defect compensator 104 may be further configured to perform any of the above-outlined FPN compensations onto the image 110, wherein for further details reference is made to the above description and, in particular, section 2.1.

Details regarding possible complex defect compensations to be performed by data processor 108, and less complex ones so as to be performed by compensator 103 have been described above with respect to section 2.3 and Fig. 9c, respectively.

The camera in Fig. 10 may be a still picture camera apparatus or a video camera apparatus. In case of being a video camera apparatus, the image sensor 102, the defect compensator 104 and the data transmitter 106 may be configured to run in realtime, and the data processor 108 may be configured to perform the second defect compensation 52 off-line. Additionally, for example, the data processor 108 works off-camera. Thus, any increase of the complexity of the defect pixel compensation 52 may be achieved more easily since no real-time constraints have to be coped with. As far as the data transmitter 106 and its realtime realization is concerned, it is noted that the realtime implementation may, of course, merely apply to the compressor 122 while the decompressor 124 may also operate off-line, so that even the compression computation effort may be implemented with less complex hardware. The compressed data would be output at output interface 126 in real-time and, for example, preliminarily stored in storage 128.

Of course, the data processor 108 needs to know the location of the defect pixels, i.e. the defect pixel position 112. Data processor 108 might know about these positions by default, i.e. by calibrating the data processor accordingly: Alternatively, the output interface 126 may be configured to further output information indicating the defect pixel position 112 along with the compressed image. In order for the defect compensator 104 to know the defect positions, multiple options may be used: The defect locations could be given by the manufacturer, they could be estimated from calibration data, or they could be estimated from live data.

Thus, from another point of view, Fig. 10 also describes a camera 118 comprising the image sensor 102, the defect compensator 104, the compressor 122 and the output interface 126. This camera 118 may comprise a housing 116 within which the image sensor 102, the defect compensator 104, the compressor 122 and the output interface 126 may be arranged. The camera 118 may be portable and driven by a battery or other accumulator, it may be cable operated such as when affixed to a crane, a crash test car or anywhere else to where cables extend, but where the camera should be small, or the camera may be even stationary. The output interface 126 may be configured to further output information indicating the defect pixel position 112 along with a compressed image. The camera may be a video camera and the image sensor 102, the defect compensator 104, the compressor 122 and the output interface 126 may be configured to operate in real-time. As already described above when motivating the embodiment of Fig. 10, the captured image 110 which the defect compensator 104 operates on, may be a CFA image. For example, the raw image may be based on a Bayer pattern. Alternatively, an irregular grid or irregular distribution of the individual color component sensor cells may be used. FPN compensation according to any of the alternatives described above in section 2.1 may be performed upstream the defect compensation 50 at defect compensator 104 or downstream thereof prior to the compression at compressor 122. Alternatively, the FPN compensation may be performed within the outside domain 30 such as within data processor 108. The color reconstruction within data processor 108 may use any of the algorithms mentioned and described in section 2.4. Regarding the possibilities for the compression, reference is made to section 2.5.

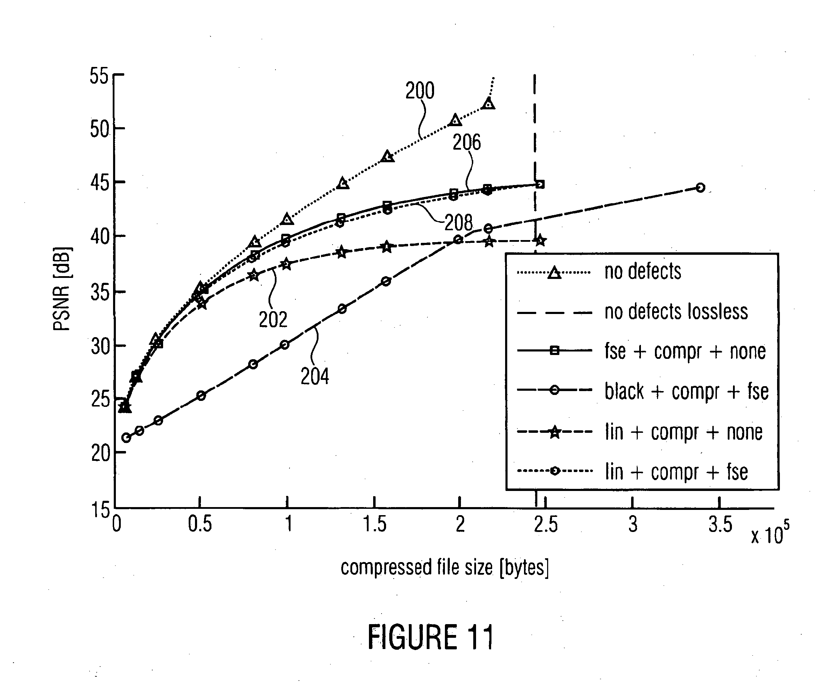

Using the principles outlined above with respect to Figs. 9c and 10, simulations have been performed. Fig. 11 shows the result of the simulation with using lossy compression as an example: without any defect, pixel curve 200 is achieved. In this case, the error is merely caused by quality degradation due to the compression. A simple compensation within the camera results in curve 202 corresponding to low quality. A high performance compensation downstream the compression and without previous compensation results in curve 204. As can be seen, the quality may not be restored. A high performance compensation prior to compression results in a good result as shown at curve 206, but due to the high complexity involved therewith, this alternative is not realistic. The preferred embodiment described above with respect to Figs. 9c and 10 using the two-stage compensation, almost result in roughly the same quality as shown at curve 208.

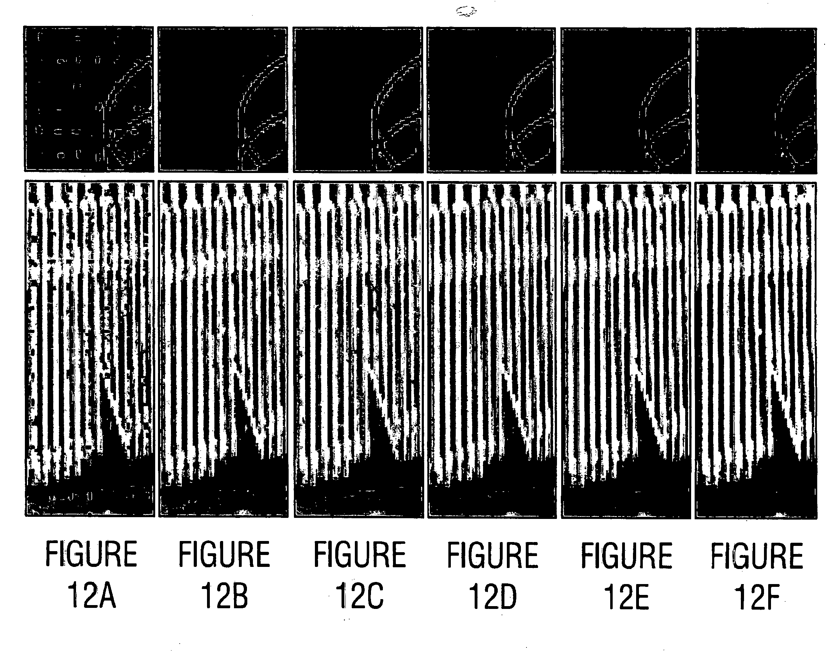

Fig. 12 shows examples for simulated image portions. The simulated image examples in Fig. 12 show the problem. As a further post-processing such as within data processor 108, the images were reconstructed with the algorithm AHD. a) shows uncorrected defect pixels, b) shows a complex correction succeeding the compression where artifacts are clearly visible, c) shows a linear interpolation within the camera wherein the penalties for the compression are clearly visible in the pattern on the fence, d) shows a high performance compensation within the camera which procedure corresponds to the unrealistic case, e) shows a two-stage compensation procedure in accordance with Fig. 9c and f) shows the original image of the simulation.

Thus, the preferred embodiment of Figs. 9c and 10 have the advantage that high performance and complex algorithms may be used for defect compensation. The complexity of the algorithms within the camera, however, remain low. A further advantage stems from the synergy between the two-stage defect compensation and the data compression. Resulting therefrom, the camera needs less resources. This, however, reduces production costs, power consumption, accumulator weight, necessary cooling power and necessary transmission rate.

Finally, it is again noted that the data format output at output interface 126 may or may not comprise the position of the defect pixels. The data processor may use the information on the position of the defect pixels in order to perform the second defect compensation 52 onto these pixel positions in order to determine for these pixel positions higher quality corrected values. However, alternatively, the data processor is calibrated onto the image sensor. That is, data processor 108 could have been provided with the information concerning the locations of defect pixels in advance, such as before shipping within an calibration procedure, and no more information regarding the same may have to be transmitted from the camera to the data processer.

Thus, the above-described preferred embodiment is useful in the construction and design of high quality camera systems and camera systems with low complexity which, however, despite this have a high image quality. This was enabled by shifting algorithmic workload between the camera and off-camera processing stages adequately. Generally, rendering algorithms were moved from within the camera to an off-camera processing domain. Not only the camera complexity has been reduced, but the resulting image quality has also been enhanced significantly.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some examples, some, one or more of the most important method steps may be executed by such an apparatus.

Depending on certain implementation requirements, the preferred embodiment of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some examples according to the invention comprise a data carrier having electronically readable control signals, which are capable of cooperating with a programmable computer system, such that one of the methods described herein is performed.

Generally, examples of the present invention can be implemented as a computer program product with a program code, the program code being operative for performing one of the methods when the computer program product runs on a computer. The program code may for example be stored on a machine readable carrier.

Other examples comprise the computer program for performing one of the methods described herein, stored on a machine readable carrier.

In other words, an example of method is, therefore, a computer program having a program code for performing one of the methods described herein, when the computer program runs on a computer.

A further example of the method is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further example of the method is, therefore, a data stream or a sequence of signals representing the computer program for performing one of the methods described herein. The data stream or the sequence of signals may for example be configured to be transferred via a data communication connection, for example via the Internet.

A further example comprises a processing means, for example a computer, or a programmable logic device, configured to or adapted to perform one of the methods described herein.

A further example comprises a computer having installed thereon the computer program for performing one of the methods described herein.

A further example according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some example, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

References

1. CinemaDNG Image Data Format Specification (2009)

2. Bayer, B.: Color imaging array (1976). US Patent 3,971,065

3. Doutre, C., Nasiopoulos, P., Plataniotis, K.N.: H.264-based compression of bayer pattern video sequences. IEEE Transactions on Circuits and Systems for Video Technology 18(6), 725- (2008)

4. Fowler, B., Gamal, A.E., Yang, D., Tian, H.: A Method for Estimating Quantum Efficiency for CMOS Image Sensors. In: SPIE Solid State Sensor Arrays: Development and Applications II, vol. 3301, pp. 178-185. SPIE (1998)

5. Franzen, R.: Kodak lossless true color image suite. http://r0k.us/graphics/kodak/ (2011)

6. Gamal, A.E., Fowler, B.A., Min, H., Liu, X.: Modeling and estimation of FPN components in CMOS image sensors. In: SPIE Solid State Sensor Arrays: Development and Applications II, vol. 3301, pp. 168-177 (1998). DOI 10.1117/12.304560

7. Gunturk, B., Altunbasak, Y., Mersereau, R.: Color plane interpolation using alternating pro- jections. IEEE Transactions on Image Processing 11(9), 997-1013 (2002)

8. Hirakawa, K., Parks, T.: Adaptive homogeneity-directed demosaicing algorithm. IEEE Trans- actions on Image Processing 14(3), 360-369 (2005)

9. Kovac, M.: Removal of Dark Current Spikes from Image Sensor Output Signals (1975). US Patent 3,904,818

10. Levine, P.: Adaptive defect correction for solid-state imagers (1986). US Patent 4,600,946

11. Lian, N.X., Chang, L., Zagorodnov, V., Tan, Y.P.: Reversing demosaicking and compression in color filter array image processing: Performance analysis and modeling. IEEE Transactions on Image Processing 15(11), 3261 -3278 (2006). DOI 10.1109/TIP.2006.882024

12. Lukac, R.: Single-Sensor Imaging: Methods and Applications for Digital Cameras, 1 edn. CRC Press, Inc., Boca Raton, FL, USA (2008)

13. Malueg, R.: Detector Array Fixed-Pattern Noise Compensation (1976). US Patent 3,949,162

14. Menon, D., Calvagno, G.: Color image demosaicking: An overview. Signal Processing: Image Communication In Press (2011)

15. Moghadam, A., Aghagolzadeh, M., Kumar, M., Radha, H.: Compressive demosaicing. In: IEEE International Workshop on Multimedia Signal Processing (MMSP), pp. 105-110. IEEE (2010)

16. Pape, D., Reiss, W.: Defect correction apparatus for solid state imaging devices including inoperative pixel detection (1991). US Patent 5,047,863

17. Pillman, B., Guidash, R., Kelly, S.: Fixed Pattern Noise Removal in CMOS Imagers Across Various Operational Conditions (2006). US Patent 7,092,017

18. Schöberl, M., Fößel, S., Kaup, A.: Fixed Pattern Noise Column Drift Compensation (CDC) for Digital Moving Picture Cameras. In: IEEE International Conference on Image Processing (ICIP), pp. 573-576. Hong Kong (2010). DOI 10.1109/ICIP.2010.5652732

19. Schöberl, M., Seiler, J., Kasper, B., Fößel, S., Kaup, A.: Sparsity-Based Defect Pixel Compensation for Arbitrary Camera Raw Images. In: IEEE International Conference on Acoustics, Speech, and Signal Processing (ICASSP). Prague, Czech Republic (2011)

20. Schöberl, M., Senel, C., Fößel, S., Bloss, H., Kaup, A.: Non-linear Dark Current Fixed Pattern Noise Compensation for Variable Frame Rate Moving Picture Cameras. In: European Signal Processing Conference (EUSIPCO), pp. 268-272 (2009)

21. Seiler, J., Kaup, A.: Complex-valued frequency selective extrapolation for fast image and video signal extrapolation. IEEE Signal Processing Letters 17(11), 949 -952 (2010). DOI 10.1109/LSP.2010.2078504

22. Tanbakuchi, A., van der Sijde, A., Dillen, B., Theuwissen, A., de Haan, W.: Adaptive pixel defect correction. In: Proc. SPIE Sensors and Camera Systems for Scientific, Industrial, and Digital Photography Applications IV, vol. 5017, pp. 360-370 (2003)

23. Tian, H., Fowler, B.A., Gamal, A.E.: Analysis of temporal noise in CMOS APS. In: SPIE Sensors, Cameras, and Systems for Scientific/Industrial Applications, vol. 3649, pp. 177-185 (1999). DOI 10.1117/12.347073

24. Wang, S., Yao, S., Faurie, O., Shi, Z.: Adaptive defect correction and noise suppression module in the CIS image processing system. In: Proc. SPIE Int. Symposium on Photoelectronic Detection and Imaging, vol. 7384, p. 73842V (2009)

25. White, M., Lampe, D., Blaha, F., Mack, I.: Characterization of surface channel CCD image arrays at low light levels. IEEE Journal of Solid-State Circuits 9(1), 1-12 (1974)

26. Zhang, N., Wu, X.: Lossless compression of color mosaic images. IEEE Transactions on Image Processing 15(6), 1379 -1388 (2006). DOI 10.1109/TIP.2005.871116

27. S. Mendis, T. Shu: Pixel Defect Correction in a CMOS Active Pixel Image Sensor, Patent US 2005/0030394

**EP 2 721 810 B1**

**Claims**

1. Camera apparatus comprising
   a camera housing (116);
   an image sensor (102), arranged within the camera housing (116), configured to capture a raw image (110) having a defect pixel position (112);
   a defect compensator (104), arranged within the camera housing (116), configured to subject the raw image to a first defect compensation (50) to obtain a preliminarily compensated raw image having the defect pixel position (112) interpolated;
   a data processor (108) arranged outside the camera housing; and
   a data transmitter (106) configured to transmit the preliminarily compensated raw image via compression to the data processor (108), along with information indicating the defect pixel position (112),
   wherein the data processor is configured to perform a second defect compensation (52) being of higher complexity than the first defect compensation onto the transmitted raw image after decompression, wherein the data processor is configured to use the information indicating the defect pixel position (112) in order to discard the interpolated value at the defect pixel position after the first defect compensation and to replace the interpolated value by a new value obtained by performing the second defect compensation (52) at the defect pixel position (112).

2. Camera apparatus according to claim 1, wherein the defect compensator is configured to, within the first defect compensation (50), locally interpolate the raw image (110) at the defect pixel position (112) with leaving the raw image at surrounding non-defect pixel positions (114) unchanged.

3. Camera apparatus according to claim 1 or 2, wherein the first defect compensation (50) involves a linear interpolation, and the second defect compensation (52) involves a non-linear or frequency selective extrapolation based interpolation.

4. Camera apparatus according to any of the previous claims, wherein the image sensor (102), the defect compensator (104) and the data transmitter (106) arc configured such that the raw image, the preliminarily compensated raw image and the transmitted raw image are color raw images, and the data processor (108) is further configured to perform a demosaicing onto the transmitted raw image.

5. Camera apparatus according to any of the previous claims, wherein the defect compensator (104) is further configured to perform a fixed pattern noise compensation onto the raw image (110).

6. Camera apparatus according to any of the previous claims, wherein the data transmitter (106) comprises a compressor (122) configured to perform a compression onto the preliminarily compensated raw image, and a decompressor (124) configured to perform a decompression onto the compressed raw image.

7. Camera apparatus according to any of the previous claims, wherein the camera apparatus is a video camera apparatus and the image sensor (102), the defect compensator (104) and the data transmitter (106) are configured to run in real time, and the data processor (108) is configured to perform the second defect compensation (52) off-line.

8. Camera apparatus according to any of the previous claims, wherein the data transmitter (106) is configured such that the compression is lossy.

9. Method comprising
   capturing a raw image having a defect pixel position using an image sensor arranged within a camera housing;
   subjecting, within the camera housing (116), the raw image to a first defect compensation by a defect compensator to obtain a preliminarily compensated raw image having the defect pixel position interpolated;
   transmitting, along with information indicating the defect pixel position (112), the preliminarily compensated raw image via compression to a data processor arranged outside the camera housing (116),; and
   performing a second defect compensation being of higher complexity than the first defect compensation onto the transmitted raw image after decompression within the data processor, with using the information indicating the defect pixel position (112) in order to discard the interpolated value at the defect pixel position after the first defect compensation and to replace the interpolated value by a new value obtained by performing the second defect compensation (52) onto the defect pixel position (112).

10. Computer program with a program code for performing the method according to claims 9 when the computer program is executed on a computer.

**Patentansprüche**

1. Kameravorrichtung, die folgende Merkmale aufweist:

   ein Kameragehäuse (116);
   einen Bildsensor (102), der in dem Kameragehäuse (116) angeordnet ist, der konfiguriert ist, um ein Rohbild (110) mit einer defekten Pixelposition (112) aufzunehmen;
   einen Defektkompensator (104), der in dem Kameragehäuse (116) angeordnet ist, der konfiguriert ist, um das Rohbild einer ersten Defektkompensation (50) zu unterziehen, um ein vorläufig kompensiertes Rohbild zu erhalten, bei dem die defekte Pixelposition (112) interpoliert ist;
   einen Datenprozessor (108), der außerhalb des Kameragehäuses angeordnet ist; und
   einen Datensender (106), der konfiguriert ist, um das vorläufig kompensierte Rohbild über Komprimierung an den Datenprozessor (108) zu senden, zusammen mit einer Information, die die defekte Pixelposition (112) anzeigt,
   wobei der Datenprozessor konfiguriert ist, um eine zweite Defektkompensation (52) mit einer höheren Komplexität als die erste Defektkompensation an dem gesendeten Rohbild nach der Dekomprimierung durchzuführen,
   wobei der Datenprozessor konfiguriert ist, um die Information, die die defekte Pixelposition (112) anzeigt, zu verwenden, um den interpolierten Wert an der defekten Pixelposition nach der ersten Defektkompensation zu löschen, und um den interpolierten Wert durch einen neuen Wert zu ersetzen, der durch Durchführen der zweiten Defektkompensation (52) an der defekten Pixelposition (112) erhalten wird.

2. Kameravorrichtung gemäß Anspruch 1, bei der der Defektkompensator konfiguriert ist, um innerhalb der ersten Defektkompensation (50) das Rohbild (110) an der defekten Pixelposition (112) lokal zu interpolieren, wobei das Rohbild an umgebenden nicht-defekten Pixelpositionen (114) unverändert bleibt.

3. Kameravorrichtung gemäß Anspruch 1 oder 2, bei der die erste Defektkompensation (50) eine lineare Interpolation umfasst und die zweite Defektkompensation (52) eine nicht-lineare oder frequenzselektive extrapolationsbasierte Interpolation umfasst.

4. Kameravorrichtung gemäß einem der vorhergehenden Ansprüche, bei der der Bildsensor (102), der Defektkompensator (104) und der Datensender (106) konfiguriert sind, so dass das Rohbild, das vorläufig kompensierte Rohbild und das gesendete Rohbild farbige Rohbilder sind, und der Datenprozessor (108) ferner konfiguriert ist, um an dem gesendeten Rohbild Mosaikrückbildung durchzuführen.

5. Kameravorrichtung gemäß einem der vorhergehenden Ansprüche, bei der der Defektkompensator (104) ferner konfiguriert ist, um an dem Rohbild (110) eine Festmusterrauschkompensation durchzuführen.

6. Kameravorrichtung gemäß einem der vorhergehenden Ansprüche, bei der der Datensender (106) einen Kompressor (152) aufweist, der konfiguriert ist, um an dem vorläufig kompensierten Rohbild eine Komprimierung durchzuführen, und eine Dekomprimierungsvorrichtung (124), die konfiguriert ist, um an dem komprimierten Rohbild eine Dekomprimierung durchzuführen.

7. Kameravorrichtung gemäß einem der vorhergehenden Ansprüche, wobei die Kameravorrichtung eine Videokameravorrichtung ist und der Bildsensor (102), der Defektkompensator (104) und der Datensender (106) konfiguriert sind, um in Echtzeit zu laufen, und der Datenprozessor (108) konfiguriert ist, um die zweite Defektkompensation (52) prozessentkoppelt durchzuführen.

8. Kameravorrichtung gemäß einem der vorhergehenden Ansprüche, bei der der Datensender (106) konfiguriert ist, so dass die Komprimierung verlustbehaftet ist.

9. Verfahren, das folgende Schritte aufweist:

   Aufnehmen eines Rohbildes mit einer defekten Pixelposition unter Verwendung eines Bildsensors, der in einem Kameragehäuse angeordnet ist;
   Unterziehen, innerhalb des Kameragehäuses (116), des Rohbildes zu einer ersten Defektkompensation durch einen Defektkompensator, um ein vorläufig kompensiertes Rohbild zu erhalten, bei dem die defekte Pixelposition interpoliert ist;

Senden, zusammen mit der Information, die die defekte Pixelposition (112) anzeigt, des vorläufig kompensierten Rohbildes über Komprimierung an einem Datenprozessor, der außerhalb des Kameragehäuses (116) angeordnet ist; und

Durchführen einer zweiten Defektkompensation mit einer höheren Komplexität als die erste Defektkompensation, an dem gesendeten Rohbild nach der Dekomprimierung in dem Datenprozessor, unter Verwendung der Information, die die defekte Pixelposition (112) anzeigt, um den interpolierten Wert an der defekten Pixelposition nach der ersten Defektkompensation zu löschen, und um den interpolierten Wert durch einen neuen Wert zu ersetzen, der durch Durchführen der zweiten Defektkompensation (52) an der defekten Pixelposition (112) erhalten wird.

10. Computerprogramm mit einem Programcode zum Durchführen des Verfahrens gemäß Anspruch 9, wenn das Computerprogramm auf einem Computer ausgeführt wird.

## Revendications

1. Appareil de caméra comprenant
un boîtier de caméra (116);
un capteur d'image (102), disposé à l'intérieur du boîtier de caméra (116), configuré pour capturer une image brute (110) présentant une position de pixel défectueuse (112);
un compensateur de défaut (104), disposé à l'intérieur du boîtier de caméra (116), configuré de manière à soumettre l'image brute à une première compensation de défaut (50), pour obtenir une image brute compensée de manière préliminaire présentant la position de pixel défectueuse (112) interpolée;
un processeur de données (108) disposé à l'extérieur du boîtier de caméra; et
un émetteur de données (106) configuré pour transmettre l'image brute compensée de manière préliminaire par compression au processeur de données (108), ensemble avec des informations indiquant la position de pixel défectueuse (112),
dans lequel le processeur de données est configuré pour effectuer une deuxième compensation de défaut (52) de complexité supérieure à celle de la première compensation de défaut sur l'image brute transmise après décompression, dans lequel le processeur de données est configuré pour utiliser les informations indiquant la position de pixel défectueuse (112) pour éliminer la valeur interpolée à la position de pixel défectueuse après la première compensation de défaut et remplacer la valeur interpolée par une nouvelle valeur obtenue en effectuant la deuxième compensation de défaut (52) à la position de pixel défectueuse (112).

2. Appareil de caméra selon la revendication 1, dans lequel le compensateur de défaut est configuré pour interpoler localement, au sein de la première compensation de défaut (50), l'image brute (110) à la position de pixel défectueuse (112) tout en laissant inchangée l'image brute en des positions de pixel non défectueuses environnantes (114).

3. Appareil de caméra selon la revendication 1 ou 2, dans lequel la première compensation de défaut (50) implique une interpolation linéaire, et la deuxième compensation de défaut (52) implique une interpolation sur base d'une extrapolation non linéaire ou sélective en fréquence.

4. Appareil de caméra selon l'une quelconque des revendications précédentes, dans lequel le capteur d'image (102), le compensateur de défaut (104) et l'émetteur de données (106) sont configurés de sorte que l'image brute, l'image brute compensée de manière préliminaire et l'image brute transmise sont des images brutes en couleur, et le processeur de données (108) est par ailleurs configuré pour effectuer un dématriçage sur l'image brute transmise.

5. Appareil de caméra selon l'une quelconque des revendications précédentes, dans lequel le compensateur de défaut (104) est par ailleurs configuré pour effectuer une compensation de bruit de modèle fixe sur l'image brute (110).

6. Appareil de caméra selon l'une quelconque des revendications précédentes, dans lequel l'émetteur de données (106) comprend un compresseur (122) configuré pour effectuer une compression sur l'image brute compensée de manière préliminaire, et un décompresseur (124) configuré pour effectuer une décompression sur l'image brute comprimée.

7. Appareil de caméra selon l'une quelconque des revendications précédentes, dans lequel l'appareil de caméra est un appareil de caméra vidéo et le capteur d'image (102), le compensateur de défaut (104) et l'émetteur de données (106) sont configurés pour fonctionner en temps réel, et le processeur de données (108) est configuré pour réaliser la deuxième compensation de défaut (52) hors ligne.

8. Appareil de caméra selon l'une quelconque des revendications précédentes, dans lequel l'émetteur de données (106) est configuré de sorte que la compression soit avec perte.

9. Procédé comprenant le fait de
capturer une image brute présentant une position de pixel défectueuse à l'aide d'un capteur d'image disposé à l'intérieur d'un boîtier de caméra;
soumettre, dans le boîtier de caméra (116), l'image brute à une première compensation de défaut par un compensateur de défaut, pour obtenir une image brute compensée de manière préliminaire présentant la position de pixel défectueuse interpolée;
transmettre, ensemble avec les informations indiquant la position de pixel défectueuse (112), l'image brute pour obtenir une image brute par compression à un processeur de données disposé à l'extérieur du boîtier de caméra (116); et
effectuer une deuxième compensation de défaut de complexité supérieure à celle de la première compensation de défaut sur l'image brute transmise après décompression à l'intérieur du processeur de données, à l'aide des informations indiquant la position de pixel défectueuse (112), pour éliminer la valeur interpolée à la position de pixel défectueuse après la première compensation de défaut et remplacer la valeur interpolée par une nouvelle valeur obtenue en effectuant la deuxième compensation de défaut (52) sur la position de pixel défectueuse (112).

10. Programme d'ordinateur avec un code de programme pour réaliser le procédé selon la revendication 9 lorsque le programme d'ordinateur est exécuté sur un ordinateur.

Bayer raw

FIGURE 1A

bilinear

FIGURE 1B

AHD demosaicing

FIGURE 1C

original

FIGURE 1D

```
┌─────────────────┐          ┌─────────────────┐
│                 │          │      user       │
│     camera      │◄- - - - -│    settings     │
│                 │          │                 │
└─────────────────┘          └─────────────────┘
        │ │ │
        ▼ ▼ ▼
┌─────────────────┐
│      RGB        │
│  transmission   │
│                 │
└─────────────────┘
        │ │ │
        ▼ ▼ ▼
┌─────────────────┐
│    optional     │
│ post-processing │
│                 │
└─────────────────┘
        │ │ │
        ▼ ▼ ▼
```

# FIGURE 2A

```
┌─────────────────┐
│                 │
│     camera      │
│                 │
└─────────────────┘
        │
        ▼
┌─────────────────┐
│      raw        │
│  transmission   │
│                 │
└─────────────────┘
        │
        ▼
┌─────────────────┐          ┌─────────────────┐
│   off-camera    │          │      user       │
│   processing    │◄- - - - -│    settings     │
│                 │          │                 │
└─────────────────┘          └─────────────────┘
    │ │ │
    ▼ ▼ ▼
```

# FIGURE 2B

TRADITIONAL RGB PIPELINE

FIGURE 3A

RAW PIPELINE

FIGURE 3B

FIGURE 4B

FIGURE 4A

input

FIGURE 5A

mask

FIGURE 5B

v = 1

FIGURE 5C

v = 2

FIGURE 5D

v = 3

FIGURE 5E

v = 5

FIGURE 5F

v = 8

FIGURE 5G

v = 10

FIGURE 5H

v = 20

FIGURE 5I

v = 50

FIGURE 5J

v = 100

FIGURE 5K

original

FIGURE 5L

EP 2 721 810 B1

FIGURE 6

EP 2 721 810 B1

| Bayer | NNR | linear | median | ADC | cFSE | original |
|-------|-----|--------|--------|-----|------|----------|
| FIGURE 7A | FIGURE 7B | FIGURE 7C | FIGURE 7D | FIGURE 7E | FIGURE 7F | FIGURE 7G |

FIGURE 8A

FIGURE 8B

**FIGURE 9A**  **FIGURE 9B**  **FIGURE 9C**

EP 2 721 810 B1

FIGURE 10

FIGURE 11

EP 2 721 810 B1

FIGURE 12A   FIGURE 12B   FIGURE 12C   FIGURE 12D   FIGURE 12E   FIGURE 12F

EP 2 721 810 B1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 20040252201 A1
- US 20080231734 A1
- US 3971065 B
- US 3904818 A
- US 4600946 A
- US 3949162 A
- US 5047863 A
- US 7092017 B
- US 20050030394 A

## Non-patent literature cited in the description

- **DOUTRE, C. ; NASIOPOULOS, P. ; PLATANIOTIS, K.N.** H.264-based compression of bayer pattern video sequences. *IEEE Transactions on Circuits and Systems for Video Technology,* 2008, vol. 18 (6), 725
- **FOWLER, B. ; GAMAL, A.E. ; YANG, D. ; TIAN, H.** A Method for Estimating Quantum Efficiency for CMOS Image Sensors. *SPIE Solid State Sensor Arrays: Development and Applications II,* 1998, vol. 3301, 178-185
- **FRANZEN, R.** *Kodak lossless true color image suite,* 2011, http://r0k.us/graphics/kodak
- **GAMAL, A.E. ; FOWLER, B.A. ; MIN, H. ; LIU, X.** Modeling and estimation of FPN components in CMOS image sensors. *SPIE Solid State Sensor Arrays: Development and Applications II,* 1998, vol. 3301, 168-177
- **GUNTURK, B. ; ALTUNBASAK, Y. ; MERSEREAU, R.** Color plane interpolation using alternating projections. *IEEE Transactions on Image Processing,* 2002, vol. 11 (9), 997-1013
- **HIRAKAWA, K. ; PARKS, T.** Adaptive homogeneity-directed demosaicing algorithm. *IEEE Transactions on Image Processing,* 2005, vol. 14 (3), 360-369
- **LIAN, N.X. ; CHANG, L. ; ZAGORODNOV, V. ; TAN, Y.P.** Reversing demosaicking and compression in color filter array image processing: Performance analysis and modeling. *IEEE Transactions on Image Processing,* 2006, vol. 15 (11), 3261-3278
- **LUKAC, R.** Single-Sensor Imaging: Methods and Applications for Digital Cameras. CRC Press, Inc, 2008
- **MENON, D. ; CALVAGNO, G.** Color image demosaicking: An overview. *Signal Processing: Image Communication In Press,* 2011
- Compressive demosaicing. **MOGHADAM, A. ; AGHAGOLZADEH, M. ; KUMAR, M. ; RADHA, H.** IEEE International Workshop on Multimedia Signal Processing (MMSP). IEEE, 2010, 105-110
- **SCHÖBERL, M. ; FÖßEL, S. ; KAUP, A.** Fixed Pattern Noise Column Drift Compensation (CDC) for Digital Moving Picture Cameras. *IEEE International Conference on Image Processing (ICIP),* 2010, 573-576
- **SCHÖBERL, M. ; SEILER, J. ; KASPER, B. ; FÖßEL, S. ; KAUP, A.** Sparsity-Based Defect Pixel Compensation for Arbitrary Camera Raw Images. *IEEE International Conference on Acoustics, Speech, and Signal Processing (ICASSP). Prague, Czech Republic,* 2011
- **SCHÖBERL, M. ; SENEL, C. ; FÖßEL, S. ; BLOSS, H. ; KAUP, A.** Non-linear Dark Current Fixed Pattern Noise Compensation for Variable Frame Rate Moving Picture Cameras. *European Signal Processing Conference (EUSIPCO),* 2009, 268-272
- **SEILER, J. ; KAUP, A.** Complex-valued frequency selective extrapolation for fast image and video signal extrapolation. *IEEE Signal Processing Letters,* 2010, vol. 17 (11), 949-952
- **TANBAKUCHI, A. ; VAN DER SIJDE, A. ; DILLEN, B. ; THEUWISSEN, A ; DE HAAN, W.** Adaptive pixel defect correction. In: Proc. SPIE Sensors and Camera Systems for Scientific. *Industrial, and Digital Photography Applications IV,* 2003, vol. 5017, 360-370
- **TIAN, H. ; FOWLER, B.A. ; GAMAL, A.E.** Analysis of temporal noise in CMOS APS. *SPIE Sensors, Cameras, and Systems for Scientific/Industrial Applications,* 1999, vol. 3649, 177-185
- **WANG, S. ; YAO, S. ; FAURIE, O. ; SHI, Z.** Adaptive defect correction and noise suppression module in the CIS image processing system. *Proc. SPIE Int. Symposium on Photoelectronic Detection and Imaging,* 2009, vol. 7384, 73842V
- **WHITE, M. ; LAMPE, D. ; BLAHA, F. ; MACK, I.** Characterization of surface channel CCD image arrays at low light levels. *IEEE Journal of Solid-State Circuits,* 1974, vol. 9 (1), 1-12

- **ZHANG, N. ; WU, X.** Lossless compression of color mosaic images. *IEEE Transactions on Image Processing,* 2006, vol. 15 (6), 1379-1388